# EUROPÄISCHE PATENTSCHRIFT

(11) **EP 1 091 331 B1**
(45) Veröffentlichungstag und Bekanntmachung des Hinweises auf die Patenterteilung: **13.08.2003**
(21) Anmeldenummer: 00120730.7
(22) Anmeldetag: 22.09.2000
(51) Int. Cl.: G08C 19/00, H04L 12/28

(54) **Teilnehmerstelle eines Funkinstallationssystems**
Subscriber station in a radio installation system
Poste d'abonné d'un système d'installation radio

(30) Priorität: 08.10.1999 DE 19948524; 11.12.1999 DE 19959767
(43) Veröffentlichungstag der Anmeldung: 11.04.2001
(73) Patentinhaber: Merten GmbH & Co. KG, 51674 Wiehl (DE)
(72) Erfinder: Herrmann, Bernd-Peter, 51645 Gummersbach (DE); Schlechtingen, Peter, 51597 Morsbach (DE)
(74) Vertreter: Selting, Günther, Dipl.-Ing.

(56) Entgegenhaltungen:
- EP-A- 0 433 527
- DE-A- 19 521 087
- RIS H R: "ALLES IM GRIFF: EUROPÄISCHER INSTALLATIONSBUS EIB FUR DIE GEBÄUDEAUTOMATION" TECHNISCHE RUNDSCHAU,CH,HALLWAG VERLAG. BERN, Bd. 86, Nr. 2, 14. Januar 1994 (1994-01-14), Seiten 16-19, XP000422692 ISSN: 1023-0823

## Beschreibung

Die Erfindung betrifft eine Teilnehmerstelle eines Funkinstallationssystems, bei welchem Teilnehmerstellen als Sendestellen Datentelegramme zu anderen Teilnehmerstellen als Empfangsstellen über drahtlose Funkkanäle versenden.

Ein Funkinstallationssystem ist eine Anlage, die in einem Gebäude oder einem Gebäudekomplex installiert ist und zahlreiche Teilnehmerstellen aufweist, von denen einige als Sendestellen und andere als Empfangsstellen ausgebildet sind. Die Sendestellen reagieren auf externe Signale, z.B. eine Schalterbetätigung oder das Signal eines Temperatursensors, einer Alarmanlage u.dgl. und senden daraufhin Signale, die von einer Empfangsstelle oder von mehreren Empfangsstellen empfangen werden und bestimmte Reaktionen auslösen, beispielsweise das Einschalten von Licht oder eine Alarmerzeugung. Generell werden die Sendestellen an einen Sensor angeschlossen und die Empfangsstellen werden an einen Aktor angeschlossen. Bei Betätigung oder Ansprechen des Sensors wird automatisch der Aktor der zugehörigen Empfangsstelle betätigt.

Man unterscheidet zwischen Funkinstallationssystemen mit fester Kennung und solchen mit variabler Adressierung. Bei einem System mit fester Kennung hat jede Sendestelle eine ihr fabrikmäßig zugeordnete Kennung, bei der es sich um eine mehrstellige Zahl handeln kann. Bei der Installation des Funkinstallationssystems erfolgt ein Initialisierungsvorgang, bei dem die Sendestelle ihre Kennung aussendet. In der zugehörigen Empfangsstelle wird diese Kennung empfangen und gespeichert. Von da an weiß die Empfangsstelle, auf welche Kennung sie reagieren muss. Damit es nicht vorkommt, dass unterschiedliche Sendestelle dieselbe Kennung haben, muss die Kennung jeder Sendestelle praktisch weltweit einzigartig sein. Üblicherweise hat die Kennung 64 Bits. Ein solches Funkinstallationssystem hat den Vorteil einer einfachen Initialisierung ohne ein zusätzliches Inbetriebnahmewerkzeug. Allerdings eignet sich dieses System nur für eine begrenzte Größe und Komplexität, also für kleinere Anlagen.

Für größere Anlagen sind bidirektionale Funkinstallationssysteme mit variabler Adressierung bekannt. Bei diesen enthält die Sendestelle einen beschreibbaren Adressenspeicher und eine Inbetriebnahme-Schnittstelle. Bei der Inbetriebnahme wird an die Sendestelle ein Inbetriebnahmewerkzeug vorübergehend angeschlossen. Dieses schreibt in den Adressenspeicher eine Adresse ein, die ebenfalls der zugehörigen Empfangsstelle mitgeteilt wird. Auf diese Weise erhalten Sendestelle und Empfangsstelle dieselbe Adresse. Wenn eine Sendestelle sendet, wird dies nur von der zugehörigen Empfangsstelle ausgewertet, welche dieselbe Adresse aufweist. Eine Empfangsstelle kann mehrere Adressen aufweisen und somit mit mehreren Sendestellen zusammenarbeiten. Dieses Funkinstallationssystem mit wählbaren Adressen erfordert den Einsatz eines Inbetriebnahmewerkzeuges. Es eignet sich für komplexe und große Anlagen. In der Regel sind die Sendestellen zugleich Empfangsstellen und die Empfangsstellen sind zugleich Sendestellen, so dass eine Rückmeldung eines von einer Empfangsstelle empfangenen Signals an die Sendestelle zum Zwecke der Quittierung möglich ist. Die von dem Inbetriebnahmewerkzeug vergebenen Adressen sind nur in der jeweiligen Anlage eindeutig und können außerhalb der Reichweite der Funkeinrichtungen mehrfach vergeben werden.

Die Geräte der beiden geschilderten Funkinstallationssysteme unterscheiden sich grundsätzlich im Telegrammaufbau, im Inbetriebnahmeverfahren und in der Kommunikation.

In DE 195 21 087 A1 ist eine Fernsteuereinheit beschrieben, die in Verbindung mit einem drahtgebundenen Busnetz betrieben wird. Mit Hilfe eines mobilen Senders wird ein Empfänger einer ersten Fernsteuereinheit erreicht, deren Netzanschlusseinheit das Steuersignal über einem Busankoppler dem Bus zuführt, von dem es in einem beliebigen Raum eines Hauses über einen Busankoppler zu einer zweiten Fernsteuereinheit gelangt. Die Fernsteuereinheit weist einen Sender und einen Empfänger für drahtlose Datenübertragung sowie einen Busankoppler für einen Installationsbus und einen Busankoppler für einen Netzbus auf, die wahlweise angeschlossen werden können. Das Problem der Kennungserzeugung in der sendenden und in der empfangenden Teilnehmerstelle ist nicht angesprochen.

In der Veröffentlichung RIS H.R: "ALLES IM GRIFF: EUROPÄISCHER INSTALLATIONSBUS EIB FÜR DIE GEBÄUDEAUTOMATION" TECHNISCHE RUNDSCHAU, CH, HALLWAG VERLAG. BERN, Bd. 86, Nr. 2, 14. Januar 1994 (1994-01-14), Seiten 16-19, XP000422692 ISSN: 1023-0823 ist das Installationsbussystem EIB für die Elektroinstallation zum Schalten, Steuern, Messen, Überwachen und Informieren beschrieben. Dabei ist das Zusammenwirken der verschiedenen Busankoppler über den Installationsbus erläutert. Greifen zwei Teilnehmer gleichzeitig auf den Bus zu, wird nur das eine Telegramm sofort gesendet. Das zweite Telegramm wird gespeichert und erst dann gesendet, wenn der Bus wieder frei ist. Bei Bedarf erfolgt eine Telegrammwiederholung. Auch hier ist die Auswahl der Kennungen für die einzelnen Teilnehmerstellen nicht angesprochen.

Der Erfindung liegt die Aufgabe zugrunde, eine Teilnehmerstelle eines Funkinstallationssystems zu schaffen, die sowohl in einem System mit fester Kennung als auch einem System mit variabler Adressierung einsetzbar ist, ohne dass gegenüber dem einfacheren System mit fester Kennung der Aufwand wesentlich erhöht wäre.

Die Lösung dieser Aufgabe erfolgt erfindungsgemäß mit den in Anspruch 1 und Anspruch 7 angegebenen Merkmalen.

Erfindungsgemäß enthält in einem Funkinstallationssystem die Sendestelle eine erste Signalerzeugungseinrichtung mit einem Kennungserzeuger für eine feste Kennung und eine zweite Signalerzeugungseinrichtung mit einem beschreibbaren Adressenspeicher. Jedem Kennungserzeuger ist ein Telegrammerzeuger zugeordnet. Eine Selektionseinrichtung kann zwischen der ersten und der zweiten Signalerzeugungseinrichtung umschalten, d.h. jede dieser Signalerzeugungseinrichtungen aktivieren bzw. mit einem Sender verbinden, während die andere Signalerzeugungseinrichtung unwirksam gemacht wird. An die Teilnehmerstelle ist ein externes Inbetriebnahmewerkzeug anschließbar. Ist das Inbetriebnahmewerkzeug nicht angeschlossen oder nicht in Betrieb, so wählt die Selektionseinrichtung die erste Signalerzeugungseinrichtung aus. Ist dagegen das Inbetriebnahmewerkzeug angeschlossen bzw. in Funktion, so schaltet die Selektionseinrichtung auf die zweite Signalerzeugungseinrichtung um. Diejenige Signalerzeugungseinrichtung, auf die die Selektionseinrichtung eingestellt wurde, bleibt auch nach der Inbetriebnahme ausgewählt. Die Teilnehmerstelle wird also mit der Inbetriebnahme auf eines der beiden Systeme automatisch eingestellt.

Unter einem Anschluss für ein externes Inbetriebnahmewerkzeug ist nicht nur ein drahtgebundener Anschluss zu verstehen, sondern auch ein drahtloser Anschluss, über den per Funk oder auf andere Weise Informationen mit dem Inbetriebnahmewerkzeug ausgetauscht werden können. So ist es beispielsweise möglich, in einer Teilnehmerstelle, die als Sendestelle ausgebildet ist, einen zusätzlichen Empfänger vorzusehen, der drahtlos Signale von dem Inbetriebnahmewerkzeug empfangen kann. Dieser Empfänger kann zusätzlich auch dazu benutzt werden, von einer anderen Teilnehmerstelle Quittiersignale zu empfangen, mit der Signale der Sendestelle bestätigt werden.

Die Erfindung ermöglicht es, dieselben unidirektionalen Teilnehmerstellen sowohl in einem klassischen unidirektionalen Funksystem (mit fester Gerätekennung) als auch in einem Funkbussystem mit dynamischer Adressenvergabe (z.B. nach dem EIB-Funkbussystem) zu verwenden. Der Aufwand gegenüber einem System mit fester Gerätekennung ist nur unwesentlich erhöht, weil die übrigen Funktionen von der in der Teilnehmerstelle ohnehin enthaltenen Hardware im wesentlichen softwaremäßig programmiert werden können. Beim Betrieb mit wählbarer Adresse, also als Funkbussystem, kann auf eine Rückmeldung oder Bestätigung der Telegramme verzichtet werden. In diesem Fall wird toleriert, dass die Geräte keine Kollisionserkennung oder Kollisionsverhinderung haben. Die Sicherheit der Kommunikation wird durch mehrfaches Aussenden der Telegramme erreicht. Funkbussysteme verfügen üblicherweise über Mechanismen zum Erkennen von Mehrfachaussendungen desselben Telegramms, z.B. durch Retransmittertechnik. Es besteht jedoch auch die Möglichkeit, in die Sendestelle einen Empfangsteil zu integrieren, obwohl dies für die Sendestelle einen erheblichen zusätzlichen Aufwand bedeuten würde.

Die erfindungsgemäße Teilnehmerstelle kann als Standardkomponente geliefert werden, die sich sowohl für ein System mit fester Gerätekennung als auch für ein System mit wählbaren Adressen eignet.

Die Telegrammerzeuger der beiden Signalerzeugungseinrichtungen können so ausgebildet sein, dass sie Telegramme nach unterschiedlichen Telegrammsprachen erzeugen. Dabei wird in Abhängigkeit davon, welches der beiden Übertragungssysteme aktiviert ist, die korrekte Telegrammsprache ausgewählt.

Gemäß einer bevorzugten Ausführungsform der Erfindung enthält die Sendestelle eine drahtbasierte Schnittstelle für den Anschluss des Inbetriebnahmewerkzeugs. Das Inbetriebnahmewerkzeug ist beispielsweise ein PC, welcher nach vorbestimmten Kriterien die Adressen vergibt, wobei der Sendestelle eine Adresse zugeteilt wird und die zugehörige Empfangsstelle dieselbe Adresse erhält.

Die Erfindung betrifft ferner eine Teilnehmerstelle, die als Empfangsstelle ausgebildet ist. Auch hierbei kann die Empfangsstelle für beide Systembetriebsarten ausgebildet sein, wobei die Betriebsartumschaltung durch eine Selektionseinrichtung erfolgt.

Im folgenden werden Ausführungsbeispiele der Erfindung unter Bezugnahme auf die Zeichnungen näher erläutert.

Es zeigen:
- Fig. 1: ein Blockschaltbild einer als Sendestelle ausgebildeten Teilnehmerstelle eines Funkinstallationssystems, und
- Fig. 2: ein Blockschaltbild einer als Empfangsstelle ausgebildeten Teilnehmerstelle eines Funkinstallationssystems.

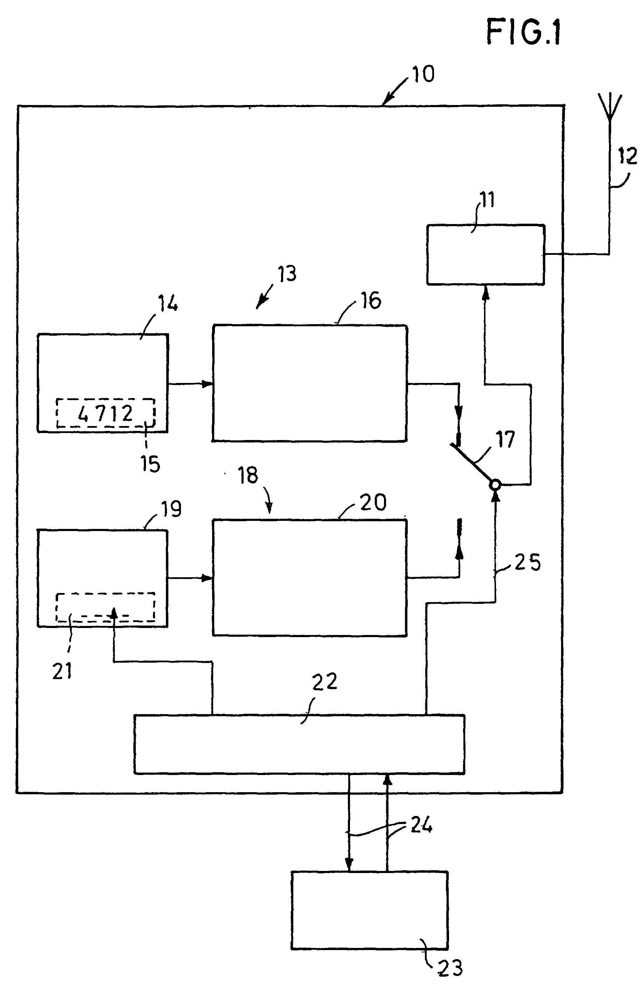

Die Teilnehmerstelle nach Fig. 1 ist als Sendestelle 10 ausgebildet. Sie enthält einen Sender 11, dessen Sendesignal über eine Antenne 12 abgestrahlt werden. Das drahtlose Funksystem arbeitet mit einer Sendefrequenz von beispielsweise 868 MHz und hat eine begrenzte Reichweite, die auf einen Gebäudekomplex oder ein Grundstück beschränkt ist. Die Sendestelle 10 befindet sich beispielsweise an einem (nicht dargestellten) Schalter, mit dem die Beleuchtung an einer entfernt liegenden Stelle eingeschaltet und ausgeschaltet werden soll. Zum Einschalten oder Ausschalten wird ein Signal ausgesandt, das aus einer Gerätekennung oder einer Empfangsadresse und einem Telegramm besteht.

Die Sendestelle 10 enthält eine erste Signalerzeugungseinrichtung 13 aus einem Kennungserzeuger 14 für eine feste Kennung 15. Diese Kennung ist eine Zahl, die der Sendestelle fabrikmäßig eingegeben wird und die hier "4712" lautet. Dem Kennungserzeuger 14 ist ein Telegrammerzeuger 16 zugeordnet. Dieser ist in der Lage, mindestens ein aus mehreren Bits bestehendes Telegramm zu erzeugen. Wenn die Teilnehmerstelle dazu bestimmt ist, die Zustände eines Schalters zu übertragen, können zwei verschiedene Telegramme übertragen werden, nämlich Schalter aus und Schalter ein.

Die Gerätekennung und das Telegramm werden einer Selektionseinrichtung 17 zugeführt, die hier als Schalter dargestellt ist und die die erste Signalerzeugungseinrichtung 13 mit dem Sender 11 verbindet. In dem anderen Zustand verbindet die Selektionseinrichtung 17 eine zweite Signalerzeugungseinrichtung 18 mit dem Sender 11, während die erste Signalerzeugungseinrichtung 13 unwirksam gemacht ist.

Die zweite Signalerzeugungseinrichtung 18 enthält einen Adressenspeicher 19, der mit einer wählbaren Adresse 21 beschreibbar ist. Dem Adressenspeicher 19 ist ein Telegrammerzeuger 20 zugeordnet. Dieser Telegrammerzeuger 20 erzeugt Telegramme für ein standardisiertes Bussystem, z.B. das EIB-System. Die Signale der Signalerzeugungseinrichtung 18 werden von der Selektionseinrichtung 17 zum Sender 11 übertragen, wenn die Selektionseinrichtung sich in dem (nicht dargestellten) Umschaltzustand befindet. Normalerweise verbindet die Selektionseinrichtung 17 die erste Signalerzeugungseinrichtung 13 mit dem Sender 11.

Die Sendestelle 10 enthält eine zusätzliche z.B. drahtbasierte Schnittstelle 22 für den Anschluss eines externen Inbetriebnahmewerkzeugs 23. Das Inbetriebnahmewerkzeug 23 ist beispielsweise ein PC, der über einen speziellen Adapter an die Sendestelle 10 angeschlossen werden kann. Die Anschlussleitungen sind mit 24 bezeichnet. Das Inbetriebnahmewerkzeug 23 dient dazu, in den Adressenspeicher 19 eine bestimmte Adresse 21 einzuspeichern, welche dann die Adresse der Sendestelle 10 bei Busbetrieb ist. Dieselbe Adresse wird der zugehörigen Empfangsstelle mitgeteilt, so dass nur diese eine Sendestelle 10 unter der betreffenden Adresse mit der zugehörigen Empfangsstelle korrespondieren kann.

Die Umschaltung der Selektionseinrichtung 17 erfolgt durch die Schnittstelle 22 über eine Leitung 25. Die Selektionseinrichtung 17 befindet sich im Lieferzustand in der in Fig. 1 dargestellten Position. Wenn das Inbetriebnahmewerkzeug 23 angeschlossen ist und mit der Sendestelle 10 kommuniziert, wird dies in der Schnittstelle 22 erkannt und daraufhin wird die Selektionseinrichtung 17 auf die zweite Signalerzeugungseinrichtung 18 umgeschaltet. In dieser Stellung verbleibt die Selektionseinrichtung 17 anschließend, auch wenn das Inbetriebnahmewerkzeug 23 entfernt wurde. Durch besondere Maßnahmen kann die Selektionseinrichtung 17 wieder rückgesetzt werden.

Bei dem vorliegenden Ausführungsbeispiel arbeitet die Sendestelle 10 ausschließlich undirektional, d.h. sie sendet nur Signale aus. Die Sendestelle ist dazu geeignet, wahlweise mit einer Empfangsstelle mit fester Gerätekennung oder mit beschreibbarem Adressenspeicher zusammenzuarbeiten. Nach der Art des ausgewählten Übertragungssystems ändert sich auch die Telegrammsprache. Die Telegrammerzeuger 16 und 20 erzeugen Telegramme von unterschiedlichen Telegrammsprachen.

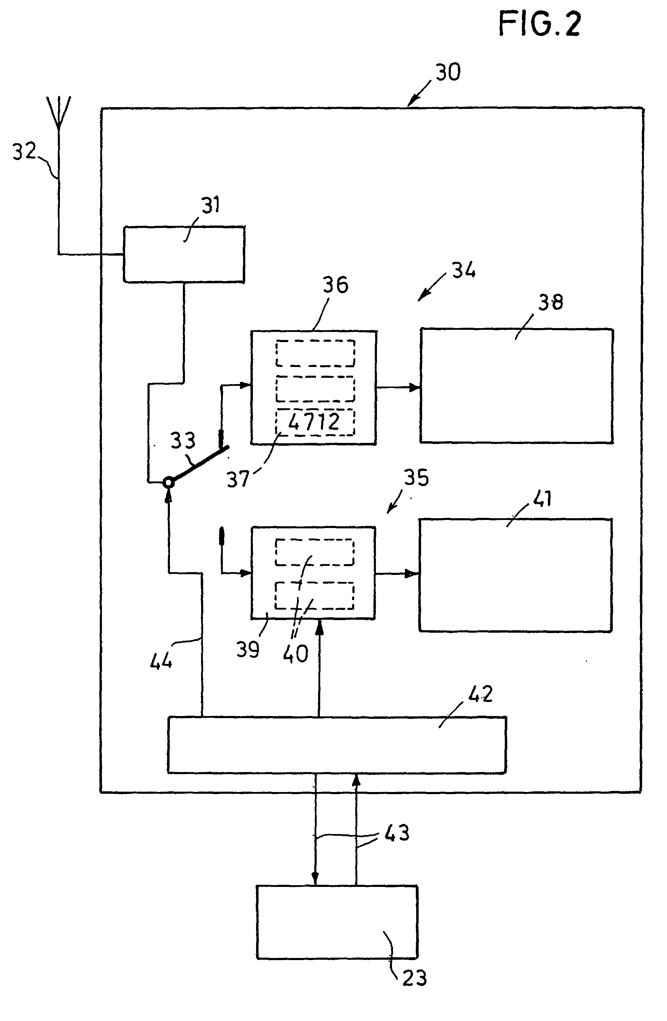

Eine Teilnehmerstelle als Empfangsstelle 30 ist in Fig. 2 dargestellt. Diese Teilnehmerstelle enthält einen Empfänger 31, der mit einer Empfangsantenne 32 verbunden ist, eine Selektionseinrichtung 33 und eine erste Signalauswerteeinrichtung 34 und eine zweite Signalauswerteeinrichtung 35. Die erste Signalauswerteeinrichtung 34 enthält einen Verbindungsspeicher 36 für eine feste Kennung 37, und eine Telegrammauswertung 38. Die zweite Signalauswerteeinrichtung 35 enthält einen beschreibbaren Adressenspeicher 39 mit mehreren Adressenplätzen 40, und eine Telegrammauswertung 41.

Die Empfangsstelle 30 enthält ferner eine Inbetriebnahme-Schnittstelle 42, welche über drahtgebundene Leitungen 43 mit einem Inbetriebnahmewerkzeug 23, 23 verbindbar ist.

Der Verbindungsspeicher 36 enthält die Kennungen 37 derjenigen Sendestellen, deren Telegramme von der betreffenden Empfangsstelle 30 empfangen werden soll. Das Einschreiben dieser Kennungen 37 erfolgt in einem Initialisierungsvorgang, bei dem die betreffende Sendestelle ihre Adresse aussendet. Diese Adresse wird von der Empfangsstelle 30 empfangen und in dem Verbindungsspeicher 36 gespeichert.

Die Selektionseinrichtung 33 ist fabrikmäßig auf die dargestellte Position eingestellt, in der der Empfänger 31 mit der ersten Signalauswerteeinrichtung 34 verbunden ist.

Erfolgt die Signalübertragung im Busmodus, wird das Inbetriebnahmewerkzeug 23 angeschlossen. Die Schnittstelle 42 schaltet über Leitung 44 die Selektionseinrichtung 33 auf die zweite Signalauswerteeinrichtung 35 um. Von dem Inbetriebnahmewerkzeug 23 wird in den Adressenspeicher 39 dieselbe Adresse eingegeben, die die entsprechende Sendestelle hat. Nachfolgend bleibt die Selektionseinrichtung 33 umgeschaltet, wenn sie nicht durch besondere Maßnahmen rückgesetzt wird.

Die Erfindung erlaubt also eine Betriebsart derselben Teilnehmerstelle wahlweise als Teilnehmer eines einfachen Funkübertragungssystems oder als Teilnehmer eines Funkbussystems. Bei der Teilnahme an einem Funkbussystem erfolgt bei den beschriebenen Ausführungsbeispielen keine Rückmeldung. Die Teilnehmerstellen sind nur für undirektionalen Betrieb ausgelegt. Alternativ ist es aber auch möglich, die Erfindung bei bidirektionalem Betrieb zu verwenden, jedoch müßten dann die Teilnehmerstellen jeweils mit Sender und Empfänger ausgestattet sein.

## Patentansprüche

1. Teilnehmerstelle eines Funkinstallationssystems, bei welchem Teilnehmerstellen als Sendestellen (10) und Teilnehmerstellen als Empfangsstellen (30) zum Austausch von Datentelegrammen vorgesehen sind,
**dadurch gekennzeichnet,**
**dass** die Sendestelle (10)
eine erste Signalerzeugungseinrichtung (13) mit einem Kennungserzeuger (14) für eine feste Kennung (15) und einem ersten Telegrammerzeuger (16),
eine zweite Signalerzeugungseinrichtung (18) mit einem beschreibbaren Adressenspeicher (19) für eine einzugebende variable Kennung und einem zweiten Telegrammerzeuger (20),
eine zwischen der ersten und der zweiten Signalerzeugungseinrichtung wählende Selektionseinrichtung (17),
und einen Anschluss für ein externes Inbetriebnahmewerkzeug (23), das die variable Kennung für die zweite Signalerzeugungseinrichtung (18) liefert,
aufweist,
wobei die Selektionseinrichtung (17) durch Anschließen und/oder Operieren des Inbetriebnahmewerkzeugs (23) umschaltbar ist.

2. Teilnehmerstelle nach Anspruch 1, **dadurch gekennzeichnet, dass** die Selektionseinrichtung (17) auf eine Signalerzeugungseinrichtung (13) eingestellt ist und durch Anschließen und/oder Operieren des Inbetriebnahmewerkzeugs (23) auf die andere Signalerzeugungseinrichtung (18) umschaltbar ist.

3. Teilnehmerstelle nach Anspruch 2, **dadurch gekennzeichnet, dass** die Selektionseinrichtung (17) auf die erste Signalerzeugungseinrichtung (13) eingestellt ist.

4. Teilnehmerstelle nach einem der Ansprüche 1-3, **dadurch gekennzeichnet, dass** die Telegrammerzeuger (16,20) beider Signalerzeugungseinrichtungen (13,18) Telegramme nach unterschiedlichen Telegrammsprachen erzeugen.

5. Teilnehmerstelle nach einem der Ansprüche 1-4, **dadurch gekennzeichnet, dass** die zweite Signalerzeugungseinrichtung (18) im Falle ihrer Auswahl Telegrammwiederholungen zur Sicherung des Datentransfers erzeugt.

6. Teilnehmerstelle nach einem der Ansprüche 1 bis 5, **dadurch gekennzeichnet, dass** die Sendestelle (10) eine drahtgebundene Schnittstelle für den Anschluss des Inbetriebnahmewerkzeugs (23) enthält.

7. Teilnehmerstelle eines Funkinstallationssystems, bei welchem Teilnehmerstellen als Sendestellen und Teilnehmerstellen als Empfangsstellen zum Austausch von Datentelegrammen vorgesehen sind, **dadurch gekennzeichnet, dass** die Empfangsstelle (30)
eine erste Signalauswerteeinrichtung (34) mit einem Verbindungsspeicher (36) für eine Kennung (37) und einer ersten Telegrammauswertung (38),
eine zweite Signalauswerteeinrichtung (35) mit einem beschreibbaren Adressenspeicher (39) für eine einzugebende variable Kennung und einer zweiten Telegrammauswertung (41),
eine zwischen der ersten und der zweiten Signalauswerteeinrichtung (34,35) wählende Selektionseinrichtung (33),
und einen Anschluss für ein externes Inbetriebnahmewerkzeug (23), das die variable Kennung für die zweite Signalerzeugungseinrichtung (18) liefert,
aufweist,
wobei die Selektionseinrichtung (33) durch Anschließen und/oder Operieren des Inbetriebnahmewerkzeugs (23) umschaltbar ist.

8. Teilnehmerstelle nach Anspruch 7, **dadurch gekennzeichnet, dass** die Selektionseinrichtung (33) auf eine Signalauswerteeinrichtung (34) eingestellt ist und durch Anschließen und/oder Operieren des Inbetriebnahmewerkzeugs (23) auf die andere Signalauswerteeinrichtung (35) umschaltbar ist.

9. Teilnehmerstelle nach Anspruch 8, **dadurch gekennzeichnet, dass** die Selektionseinrichtung (33) auf die erste Signal-Auswerteeinrichtung (34) eingestellt ist.

10. Teilnehmerstelle nach einem der Ansprüche 7-9, **dadurch gekennzeichnet, dass** die Telegrammauswertungen (38,41) beider Signalauswerteeinrichtungen (34,35) Telegramme nach unterschiedlichen Telegrammsprachen erkennen.

11. Teilnehmerstelle nach einem der Ansprüche 7-10, **dadurch gekennzeichnet, dass** die Empfangsstelle (30) eine drahtgebundene Schnittstelle (42) für den Anschluss des Inbetriebnahmewerkzeugs (23) enthält.

## Claims

1. Subscriber station in a radio installation system, wherein subscriber stations are provided as transmitting stations (10) and subscriber stations are provided as receiving stations (30) for exchanging data telegrams,
**characterized in that**
the transmitting station (10) comprising:
- a first signal generating means (13) comprising an identification generator (14) for a fixed identification (15), and a first telegram generator (16),
- a second signal generating means (18) comprising a writable address memory (19) for a variable identification to be inputted and a second telegram generator (20),
- a selecting means (17) selecting between the first and second signal generating means,
- and a connector for an external start-up tool (23) providing the variable identification for the second signal generating means (18),
the selecting means (17) being switchable by connecting and/or operating the start-up tool (23).

2. Subscriber station of claim 1, **characterized in that** the selecting means (17) is attuned to one signal generating means (13) and is switchable to the other signal generating means (18) by connecting and/or operating the start-up tool (23).

3. Subscriber station of claim 2, **characterized in that** the selecting means (17) is attuned to the first signal generating means (13).

4. Subscriber station of one of claims 1-3, **characterized in that** the telegram generator (16, 20) of both signal generating means (13, 18) generate telegrams according to different telegram languages.

5. Subscriber station of one of claims 1-4, **characterized in that** the second signal generating means (18), if selected, generates telegram repetitions to secure the data transfer.

6. Subscriber station of one of claims 1-5, **characterized in that** the transmitting station (10) comprises a wire based interface for the connection of the start-up tool (23).

7. Subscriber station of a radio installation system, wherein subscriber stations are provided as transmitting stations (10) and subscriber stations are provided as receiving stations (30) for exchanging data telegrams, **characterized in that** the receiving station (30) comprises
- a first signal evaluating means (34) with a connection memory (36) for an identification (37) and a first telegram evaluation means (38),
- a second signal evaluating means (35) with a writable address memory (39) for a variable identification to be inputted and a second telegram evaluation means (41),
- a selecting means (33) selecting between the first and the second signal evaluating means (34, 35),
- and a connector for an external start-up tool (23) providing the variable identification for the second signal generating means (18),
the selecting means (33) being switchable by connecting and/or operating the start-up tool (23).

8. Subscriber station of claim 7, **characterized in that** the selecting means (33) is attuned to one signal evaluating means (34) and is switchable to the other signal evaluating means (35) by connecting and/or operating the start-up tool (23).

9. Subscriber station of claim 8, **characterized in that** the selecting means (33) is attuned to the first signal generating means (34).

10. Subscriber station of one of claims 7-9, **characterized in that** the telegram evaluations (38, 41) from both signal evaluating means (34, 35) generate telegrams according to different telegram languages.

11. Subscriber station of one of claims 7-10, **characterized in that** the receiving station (30) comprises a wire based interface (42) for the connection of the start-up tool (23).

## Revendications

1. Poste de communication d'un système d'installation radio dans lequel sont prévus des postes de communication comme postes d'émission (10) et des postes de communication comme postes de réception (30) pour l'échange de télégrammes de données, **caractérisé en ce que** le poste d'émission (10) présente
un premier dispositif de génération de signaux (13) comprenant un générateur d'identification (14) pour une identification fixe (15), et un premier générateur de télégrammes (16),
un deuxième dispositif de génération de signaux (18) comprenant une mémoire d'adresses (19) accessible en écriture pour une identification variable à entrer, et un deuxième générateur de télégrammes (20),
un dispositif de sélection (17) sélectionnant entre le premier et le deuxième dispositifs de génération de signaux,
et un port pour un outil de mise en service (23) extérieur, qui fournit l'identification variable pour le deuxième dispositif de génération de signaux (18),
le dispositif de sélection (17) étant commutable par la connexion et/ou l'actionnement de l'outil de mise en service (23).

2. Poste de communication selon la revendication 1, **caractérisé en ce que** le dispositif de sélection (17) est réglé sur un dispositif de génération de signaux (13) et peut être commuté sur l'autre dispositif de génération de signaux (18) par connexion et/ou actionnement de l'outil de mise en service (23).

3. Poste de communication selon la revendication 2, **caractérisé en ce que** le dispositif de sélection (17) est réglé sur le premier dispositif de génération de signaux (13).

4. Poste de communication selon l'une quelconque des revendications 1-3, **caractérisé en ce que** les générateurs de télégrammes (16, 20) des deux dispositifs de génération de signaux (13, 18) génèrent des télégrammes selon des langages de télégramme différents.

5. Poste de communication selon l'une quelconque des revendications 1-4, **caractérisé en ce que** le deuxième dispositif de génération de signaux (18), s'il est sélectionné, génère des répétitions de télégrammes pour sécuriser le transfert de données.

6. Poste de communication selon l'une quelconque des revendications 1-5, **caractérisé en ce que** le poste d'émission (10) comprend une interface filaire pour la connexion de l'outil de mise en service (23).

7. Poste de communication d'un système d'installation radio dans lequel sont prévus des postes de communication comme postes d'émission et des postes de communication comme postes de réception pour l'échange de télégrammes de données, **caractérisé en ce que** le poste de réception (30) présente
un premier dispositif d'interprétation de signaux (34) comprenant une mémoire de liaison (36) pour une identification (37), et une première interprétation de télégrammes (38),
un deuxième dispositif d'interprétation de signaux (35) comprenant une mémoire d'adresses (39) accessible en écriture pour une identification variable à entrer, et une deuxième interprétation de télégrammes (41),
un dispositif de sélection (33) sélectionnant entre le premier et le deuxième dispositifs d'interprétation de signaux (34, 35),
et un port pour un outil de mise en service (23) extérieur, qui fournit l'identification variable pour le deuxième dispositif de génération de signaux (18),
le dispositif de sélection (33) étant commutable par la connexion et/ou l'actionnement de l'outil de mise en service (23).

8. Poste de communication selon la revendication 7, **caractérisé en ce que** le dispositif de sélection (33) est réglé sur un dispositif d'interprétation de signaux (34) et peut être commuté sur l'autre dispositif d'interprétation de signaux (35) par connexion et/ou actionnement de l'outil de mise en service (23).

9. Poste de communication selon la revendication 8, **caractérisé en ce que** le dispositif de sélection (33) est réglé sur le premier dispositif d'interprétation de signaux (34).

10. Poste de communication selon l'une quelconque des revendications 7-9, **caractérisé en ce que** les interprétations de télégrammes (38, 41) des deux dispositifs d'interprétation de signaux (34, 35) identifient des télégrammes selon des langages de télégramme différents.

11. Poste de communication selon l'une quelconque des revendications 7-10, **caractérisé en ce que** le poste de réception (30) comprend une interface filaire (42) pour la connexion de l'outil de mise en service (23).
